# EUROPEAN PATENT APPLICATION

(11) **EP 4 711 336 A1**
(43) Date of publication of application: **18.03.2026**
(21) Application number: 24200789.6
(22) Date of filing: 17.09.2024
(51) Int. Cl.: C01D 5/02, B01D 53/00, C25B 1/00

(54) **A METHOD AND SYSTEM FOR PRODUCING POTASSIUM SULFATE**

(71) Applicant: Yara International ASA, 0277 Oslo (NO)
(72) Inventor: PORRO, Lino Giovanni, 1040 Etterbeek (BE)
(74) Representative: De Clercq & Partners

(57) **Abstract**

The present disclosure provides a method for producing potassium sulfate, the method comprising subjecting potassium chloride to an electrolysis reaction, thereby producing potassium hydroxide and hydrogen gas and chlorine gas, reacting the potassium hydroxide produced by electrolysis with carbon dioxide, thereby producing potassium carbonate, and reacting the potassium carbonate with sulfuric acid, thereby producing potassium sulfate and carbon dioxide. The present disclosure also provides a system for performing the method.

## Description

### Field of the disclosure

The present disclosure is related to the field of chemistry, in particular the production of potassium sulfate.

### Background information

Potassium sulfate, chemical formula: K₂SO₄, is an inorganic salt and its main use today is as a fertilizer. It comprises potassium, which is a macro nutrient, and sulfur, a secondary nutrient. Today, most of the industrial production of potassium sulfate is done using the Mannheim process, wherein potassium chloride is reacted with concentrated sulfuric acid to yield potassium sulfate and hydrogen chloride. The Mannheim process is a one-step process for transforming potassium chloride into potassium sulfate. While this process provides a high yield of potassium sulfate and requires a rather simple plant, it suffers from some drawbacks, the main one being that the process requires very high temperatures (above 600 °C), which are conventionally achieved by burning fossil fuels. This operation releases large amounts of carbon dioxide, a greenhouse gas. So, potassium sulfate produced by the Mannheim process has an important carbon footprint.

So, there is a need to design a new process for the production of potassium sulfate, which has a much lower carbon footprint.

### Summary of the disclosure

By producing an intermediate product, potassium hydroxide, using electrolysis in mild conditions, and reacting the potassium hydroxide with carbon dioxide, potassium carbonate is readily obtained and can be transformed into potassium sulfate. Carbon dioxide is re-generated and can be used in industrial applications.

In a first aspect, the present disclosure provides a method for producing potassium sulfate, the method comprising:
- subjecting potassium chloride to an electrolysis reaction, thereby producing potassium hydroxide and hydrogen gas and chlorine gas;
- reacting the potassium hydroxide produced by electrolysis with carbon dioxide, thereby producing potassium carbonate;
- reacting the potassium carbonate with sulfuric acid, thereby producing potassium sulfate and carbon dioxide.

In another aspect, the present disclosure provides a system for performing the method according to the first aspect, the system comprising a device for subjecting potassium chloride to an electrolysis reaction, a device for reacting potassium hydroxide with carbon dioxide, and a device for reacting potassium carbonate with sulfuric acid.

### Description of the Figures

Figure 1 represents an embodiment of the system according to the present invention.
Figure 2 represents an embodiment of the method according to the present invention, performed on an embodiment of the system according to the present invention.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.
All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the total weight of the formulation.

In a first aspect, the present disclosure provides a method for producing potassium sulfate, the method comprising:
- subjecting potassium chloride to an electrolysis reaction, thereby producing potassium hydroxide and hydrogen gas and chlorine gas;
- reacting the potassium hydroxide produced by electrolysis with carbon dioxide, thereby producing potassium carbonate;
- reacting the potassium carbonate with sulfuric acid, thereby producing potassium sulfate and carbon dioxide.

While the process for the production of potassium sulfate according to the present disclosure is more complex than the above-mentioned Mannheim process, advantageously, all the operations of the process are carried out in milder conditions and can lead to the immobilization or capture of carbon dioxide, thereby providing a potassium sulfate with a much lower carbon footprint than that of the Mannheim process.

In the process according to the present application, first, potassium chloride is subjected to an electrolysis reaction. During electrolysis, the potassium and chloride ions react according to Equations 1 and 2:

2Cl⁻ → Cl₂ + 2e⁻ Equation 1

2K⁺ + 2e⁻ + 2H₂O → 2KOH + H₂ Equation 2

The reaction produces potassium hydroxide, hydrogen gas, and chlorine gas. Electrolysis requires the input of electricity, but it can be carried out at room temperature, such as from 15 to 35 °C, which considerably reduces the energy requirements of the reaction compared to the Mannheim process.
The electricity can be produced by a renewable source, further decreasing the carbon footprint of the method.

The potassium hydroxide produced by electrolysis may be comprised in an aqueous solution. The potassium hydroxide obtained is a strong base that can react with weak or strong acids. Carbon dioxide is a greenhouse gas and an acid. By reacting potassium hydroxide with carbon dioxide, it is possible to extract or immobilize carbon dioxide from a composition comprising carbon dioxide (Equation 3).

2KOH + CO₂ → K₂CO₃ + H₂O Equation 3

In some embodiments, the carbon dioxide reacting with potassium hydroxide is comprised in a gas stream. In some embodiments, the carbon dioxide reacting with potassium hydroxide is comprised in an aqueous solution. The carbon dioxide concentration in the gas stream comprising carbon dioxide is not particularly limiting. Advantageously, the potassium hydroxide obtained from the electrolysis reaction may be used as a means to capture carbon dioxide.

In some embodiments, the gas stream comprising carbon dioxide that reacts with potassium hydroxide is air. Using air as a carbon dioxide source, the method leads to the capture of carbon dioxide from the atmosphere, which is highly desirable. In some countries or regions, such as the European Union, companies that capture carbon dioxide from the environment can receive carbon credits that can be traded to other companies.

In some embodiments, the gas stream comprising carbon dioxide that reacts with potassium hydroxide is an industrial by-product. Many industrial processes, such as burning fossil fuels for heat and/or electricity, generate gas streams comprising carbon dioxide, such as flue gas, which is harmful to the environment. Instead of releasing these gas streams in the atmosphere, they can be used in the present method before being released, leading a lower carbon footprint of the process generating these gas streams.

In some embodiments, the gas stream comprising carbon dioxide is passed through a wet absorption column, meaning that the absorption column produces an aqueous solution comprising carbon dioxide, for example as carbonate salts.

An absorption column is a device comprising a gas inlet, a gas outlet, a liquid inlet, and a liquid outlet. It is configured such that a gas stream received via its gas inlet interacts with the liquid solution received via its liquid inlet, such that chemical exchanges between the liquid phase and the gas phase can occur. An absorption column comprises one or more elements to increase the contact surface between the liquid phase and the gaseous phase, the element may be a packing material or a sieve tray.

It may be an advantage to first absorb carbon dioxide with an absorption column to increase the concentration of carbon dioxide before reacting it with potassium hydroxide. A higher carbon dioxide concentration increases the reaction rate between carbon dioxide and potassium hydroxide, thereby increasing the efficiency of the method. There are several technologies available for the absorption of carbon dioxide comprised in a gas stream, for example using an aqueous solution comprising basic compounds, such as amines, or an aqueous solution having a temperature from 0 to 10 °C, from 0 to 5 °C, below 10 °C, or below 5 °C.

It may be an advantage to directly use the aqueous solution produced by the electrolysis reaction as absorption medium in the absorption column. This simplifies the operations of the plant and produces an aqueous solution comprising potassium carbonate. In some embodiments, the gas stream comprising carbon dioxide is passed through a wet absorption column, wherein the aqueous solution circulating in the absorption column consists of the aqueous solution comprising potassium hydroxide produced by the electrolysis reaction. In some embodiments, the gas stream comprising carbon dioxide is passed through a wet absorption column, wherein the aqueous solution circulating in the absorption column comprises the aqueous solution comprising potassium hydroxide produced by the electrolysis reaction.

In some embodiments, the method comprises compressing a gas stream comprising carbon dioxide to obtain a compressed gas stream comprising carbon dioxide. In some embodiments, the method comprises increasing the pressure of the gas stream comprising carbon dioxide before passing the gas stream through the absorption column. In some embodiments, the method comprises passing a compressed gas stream comprising carbon dioxide through an absorption column. It may be an advantage to compress the gas stream comprising carbon dioxide, i.e., increase its pressure, before sending the gas stream to the absorption column as this allows to use an absorption column with a smaller diameter. In particular, if the present method is performed in or nearby a plant that requires compressed air for its operation, using compressed air would reduce the cost for building the plant for the present method without requiring the installation of a new air compressor.

In some embodiments, the method comprises compressing a gas stream comprising carbon dioxide to obtain a compressed gas stream comprising carbon dioxide, the compressed gas stream having a pressure ranging from 0.1 to 6.0 MPa, from 0.1 to 5.0 MPa, from 0.1 to 4.0 MPa, from 0.2 to 6.0 MPa, from 0.2 to 5.0 MPa, from 0.2 to 4.0 MPa, or from 0.1 to 3.0 MPa.

In some embodiments, the method comprises re-injecting a portion of the aqueous solution exiting the absorption column back into the absorption column. It is a goal to achieve full conversion of the potassium hydroxide into potassium carbonate. However, depending on the conditions of the reaction of potassium hydroxide with carbon dioxide, it may not be possible to achieve full conversion in one cycle of the absorption column, and it may be required to re-inject part of the aqueous solution obtained at a liquid outlet of the absorption column to a liquid inlet of the absorption column.

Potassium carbonate is a basic compound that can react with an acid, such as sulfuric acid. The reaction of potassium carbonate with sulfuric acid yields potassium sulfate and carbonic acid, according to Equation 4.

K₂CO₃ + H₂SO₄ → K₂SO₄ + H₂CO₃ Equation 4

Following separation of the potassium sulfate and the carbonic acid, the potassium sulfate obtained can be used directly as a fertilizer, or it can be used to produce more complex fertilizers, such as NPK fertilizers that comprise the three macronutrients required by crops, nitrogen (N), phosphorus (P), and potassium (K).

Once the potassium sulfate and carbonic acid are separated, a relatively pure composition comprising carbonic acid is obtained. Gaseous carbon dioxide can be easily obtained from carbonic acid to obtain a gas stream comprising a high content of carbon dioxide, for example at least 90 weight%, at least 95 weight%, or even at least 99 weight% of carbon dioxide. This high purity carbon dioxide can be used in industrial processes that require carbon dioxide, such as the production of urea, methanol, and polymers requiring carbon dioxide, such as polycarbonates. Accordingly, in some embodiments, the method comprises converting the carbon dioxide obtained in the reaction of potassium carbonate with sulfuric acid into a first by-product, in particular wherein the first by-product is urea, methanol, or a polycarbonate polymer.

The carbon dioxide may also be stored, for example in exhausted oil and/or gas fields to decrease the overall carbon dioxide concentration in the atmosphere. Storing carbon dioxide may generate additional revenue from the method using carbon credits or a carbon trading system, which exists in some countries or regions in the world.

In some embodiments, reacting potassium carbonate with sulfuric acid generates gaseous carbon dioxide. The reaction of potassium carbonate and sulfuric acid is exothermic, and if the temperature of the solution is not maintained at a low temperature, for example below 10°C, the carbonic acid dissociates into water and carbon dioxide with evaporates into the gaseous phase.

Advantageously, the method according to the present application may allow the capture of carbon dioxide from a polluted and/or low concentrated source, such as air or flue gas, and the production of a high purity, high content, stream comprising carbon dioxide from the reaction between potassium carbonate and sulfuric acid. The gas stream produced can be sold or re-used in an industrial plant, which may generate additional revenue, and lowers the overall price of the potassium sulfate produced by the method according to the first aspect.

The hydrogen produced by the electrolysis reaction is a highly valuable component. In some embodiments, the method comprises reacting the hydrogen produced by the electrolysis reaction, thereby converting it into and producing a second by-product, in particular wherein the second by-product is methanol, ammonia, or hydrogen chloride. Hydrogen and ammonia, another compound that requires hydrogen for production and which is typically obtained by the reaction of nitrogen and ammonia in the Haber-Bosch process, are envisioned as the two most important energy-bearing compounds for the decarbonization of industry and transport. Hydrogen and ammonia can be used as fuel in vehicles for transporting people and goods: hydrogen can be converted in electricity via a solid oxide fuel cell, and ammonia can be used in fuel engines, especially in ship engines.

In some embodiments, the method comprises reacting the hydrogen produced by the electrolysis reaction with chlorine gas, in particular with the chlorine gas produced by the electrolysis reaction, thereby producing hydrogen chloride. Hydrogen chloride is a strong acid that is used in many industrial processes, such as food manufacturing, steel production, oil extraction, and ore processing. Converting the hydrogen obtained from the electrolysis into hydrogen chloride increases the overall value produced by the method. Advantageously, the electrolysis of potassium chloride produces three products: potassium hydroxide, hydrogen gas, and chlorine gas (see Equations 1 and 2). It is possible to combine the hydrogen gas and chlorine gas obtained from the electrolysis to produce hydrogen chloride. In this way, no external supply of chlorine gas is required, thereby reducing the overall cost of the hydrogen chloride produced.

In some embodiments, the electrolysis reaction of potassium chloride is performed in a batch mode.

In some embodiments, the reaction of potassium hydroxide with carbon dioxide is performed in a batch mode or in a continuous mode.

In some embodiments, the reaction of potassium carbonate with sulfuric acid is performed in a batch mode or in a continuous mode.

In some embodiments, the electrolysis reaction of potassium chloride is performed in an electrolyzer.

In some embodiments, the reaction of potassium carbonate with sulfuric acid is performed in a container comprising a mixing means, and optionally a cooling means.

In another aspect, the present disclosure provides a system for performing the method according to the first aspect, the system comprising a device for subjecting potassium chloride to an electrolysis reaction, a device for reacting potassium hydroxide with carbon dioxide, located downstream of and in fluid connection with the device for subjecting potassium chloride to an electrolysis reaction, and a device for reacting potassium carbonate with sulfuric acid, located downstream of and in fluid connection with the device for reaction potassium hydroxide with carbon dioxide.

In some embodiments, the device for subjecting potassium chloride to an electrolysis reaction is an electrolyzer. The electrolyzer comprises one or more electrolysis cells, wherein each electrolysis cell comprises an anode and a cathode. The electrolyzer may be configured to separate the hydrogen gas and chlorine gas in two separate streams.

In some embodiments, the device for reacting potassium hydroxide with carbon dioxide is an absorption column.

In some embodiments, the absorption column comprises a packing material or sieve trays for increasing the contact surface between a liquid stream and a gaseous stream.

In some embodiments, the device for reacting potassium hydroxide with carbon dioxide is an absorption column connected to the device for subjecting potassium chloride to an electrolysis reaction and configured for using the aqueous solution comprising potassium hydroxide produced by said device as part of the absorption medium.

In some embodiments, the system comprises a gas compressor for increasing the pressure of a gas stream comprising carbon dioxide.

In some embodiments, the system comprises a gas compressor and an absorption column, wherein the gas compressor is connected to the absorption column and located upstream of the absorption column.

In some embodiments, the absorption column is configured to react potassium hydroxide with carbon dioxide. It is envisaged that the system may comprise an absorption column that is configured to both absorb carbon dioxide into a new medium, for example into an aqueous solution, and react the potassium hydroxide produced by electrolysis with the new medium comprising carbon dioxide.

In some embodiments, the system comprises a re-circulation loop such that a portion of the solution that exits the absorption column is re-injected in the absorption column to increase the conversion of potassium hydroxide to potassium carbonate.

In some embodiments, the device for reacting potassium carbonate with sulfuric acid is a container comprising a mixing means.

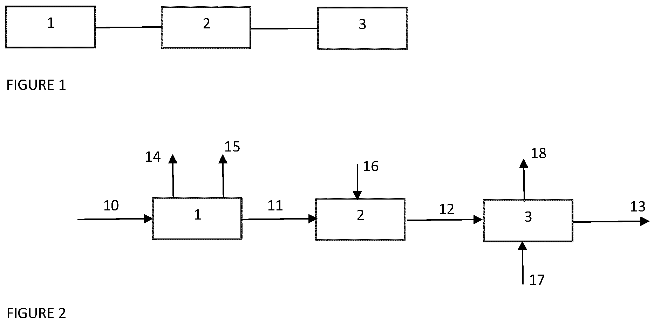

Figure 1 is an embodiment of the system according to the present invention, suitable for performing the method according to the first aspect. The system comprises an electrolyzer 1 for subjecting an aqueous solution comprising potassium chloride to an electrolysis reaction. The electrolyzer **1** comprises at least one electrolysis cell that comprises an anode and a cathode. The electrolyzer **1** is configured to produce an aqueous solution comprising potassium hydroxide, hydrogen gas, and chlorine gas. The electrolyzer **1** may be configured to separate the hydrogen gas and chlorine gas in two separate streams. The electrolyzer **1** is connected to an absorption tower **2** and the absorption tower **2** is configured to receive the aqueous solution comprising potassium hydroxide and use this aqueous solution as the absorption medium. The absorption tower **2** is connected to a source of a gas stream comprising carbon dioxide, for example air, or a waste stream comprising carbon dioxide from an industrial plant. The absorption tower **2** is configured such that the carbon dioxide interacts with the aqueous solution comprising potassium hydroxide, thereby producing an aqueous solution comprising potassium carbonate. The system may comprise a re-circulation loop, such that the aqueous solution comprising potassium hydroxide is circulated more than once in the absorption column. Such recirculation increases the conversion of potassium hydroxide to potassium carbonate. The system further comprises a device **3** for reacting potassium carbonate with sulfuric acid. The device **3** may be a container equipped with a mixing means, and optionally a cooling means for cooling the liquid in the device. The device **3** may be configured to use the aqueous solution produced by the absorption column **2.** Alternatively, the system may comprise a further device connected to the absorption column **2** and the device **3** and configured to process the aqueous solution produced by absorption column **2,** for example concentrate the aqueous solution, before directing the processed aqueous solution to the device **3.** The reaction of potassium carbonate with sulfuric acid is exothermic, so a cooling means to cool the aqueous solution in the device **3** may be required to maintain the temperature of the aqueous solution within a desired range.

Figure 2 shows an embodiment of a method for producing potassium sulfate according to the present disclosure. Potassium chloride **10** is provided to an electrolyzer **1.** The electrolysis reaction produces potassium hydroxide **11,** hydrogen gas **14,** and chlorine gas **15.** The potassium hydroxide **11** is directed to an absorption column **1,** along with a gas stream **16** comprising carbon dioxide. The absorption column produces an aqueous solution **12** comprising potassium carbonate, which is directed to a container **3** comprising a mixing means. The container also receives sulfuric acid **17,** which reacts with potassium carbonate and produces potassium sulfate **13** and carbonic acid or carbon dioxide **18.**

## Claims

1. A method for producing potassium sulfate, the method comprising:
• subjecting potassium chloride to an electrolysis reaction, thereby producing potassium hydroxide, hydrogen gas, and chlorine gas;
• reacting the potassium hydroxide produced by electrolysis with carbon dioxide, thereby producing potassium carbonate;
• reacting the potassium carbonate with sulfuric acid, thereby producing potassium sulfate and carbon dioxide.

2. The method according to claim 1, wherein the carbon dioxide reacting with potassium hydroxide is comprised in a gas stream, in particular in a gas stream at a pressure above 0.1 MPa.

3. The method according to claim 2, wherein the gas stream comprising carbon dioxide that reacts with potassium hydroxide is air.

4. The method according to claim 2, wherein the gas stream comprising carbon dioxide that reacts with potassium hydroxide is an industrial by-product.

5. The method according to any one of claims 1 to 4, further comprising converting the carbon dioxide obtained in the reaction of potassium carbonate with sulfuric acid into a first by-product, in particular wherein the first by-product is urea.

6. The method according to any one of claims 1 to 5, further comprising converting the hydrogen produced by the electrolysis reaction into a second by-product, in particular wherein the second by-product is methanol or ammonia.

7. The method according to any one of claims 1 to 6, wherein the potassium hydroxide reacting with carbon dioxide is comprised in an aqueous solution.

8. A system for performing the method according to any one of claims 1 to 7, the system comprising:
• a device for subjecting potassium chloride to an electrolysis reaction,
• a device for reacting potassium hydroxide with a gas stream comprising carbon dioxide, and
• a device for reacting potassium carbonate with sulfuric acid.

9. The system according to claim 8, wherein the device for subjecting potassium chloride to an electrolysis reaction is an electrolyzer.

10. The system according to claim 8 or 9, wherein the device for reacting potassium hydroxide with a gas stream comprising carbon dioxide is an absorption column, particularly wherein the absorption column comprises a packing material or sieve trays for increasing the contact surface between a liquid stream and a gaseous stream.

11. The system according to claim 10, further comprising a re-circulation loop configured to re-inject at least a portion of a solution that exits the absorption column in the absorption column.

12. The system according to any one of claims 8 to 11, wherein the device for reacting potassium carbonate with sulfuric acid is container comprising a mixing means and a cooling means.
